# EUROPEAN PATENT SPECIFICATION

(11) **EP 4 357 975 B1**
(45) Date of publication and mention of the grant of the patent: **31.12.2025**
(21) Application number: 22306570.7
(22) Date of filing: 17.10.2022
(51) Int. Cl.: G06N 20/20, G06N 3/045, H04L 41/147, H04L 47/726, H04L 47/125, G06F 9/50, H04L 47/83, H04L 47/70, H04L 41/16

(54) **IMPROVED PREDICTION METHODS OF RESOURCE USAGE**
VERBESSERTE VORHERSAGEVERFAHREN FÜR RESSOURCENNUTZUNG
PROCÉDÉS DE PRÉDICTION AMÉLIORÉS D'UTILISATION DE RESSOURCES

(43) Date of publication of application: 24.04.2024
(73) Proprietor: Orange, 92130 Issy-les-Moulineaux (FR)
(72) Inventor: JANASZKA, Tomasz, Warszawa (PL); BUDZINSKI, Mariusz, Warszawa (PL)
(74) Representative: Plasseraud IP

(56) References cited:
- US-B1- 11 063 842
- US-B2- 11 381 471
- DE DOMINGOS S ET AL: "A hybrid system based on ensemble learning to model residuals for time series forecasting", 30 August 2022 (2022-08-30), pages 1 - 27, XP093027538, Retrieved from the Internet <URL:https://papers.ssrn.com/sol3/papers.cfm?abstract_id=4179868> [retrieved on 20230228]

## Description

### Technical Field

This disclosure pertains to the field of prediction of time series of values relative to physical quantities or resource usage of a computing system. More specifically, it pertains to the field of the optimal selection of a prediction method.

### Background Art

Time series forecasting consist in predicting future values of a quantity based on time series of previous observations of the quantity. Time series forecasting is useful, because it allows performing actions that are adapted to future values of the quantities.

For example, time series forecasting can be used to predict future values of physical quantities (e.g temperature, humidity, etc.), or resource usage in computing systems (e.g CPU, bandwidth, memory usage, etc.). For example, the time series forecasting can be used to predict bandwidth usage in a telecommunication network, on international peering links, and allocating IP address prefixes to be announced by border routers according to predictions to balance load over the peering links, thus keeping this part of the network in a balanced state, the most resistant to sudden spikes in traffic.

Time series forecasting can be performed by different methods, such as a regression model, a neural network a statistical model, etc. The different methods may also correspond to different parameters and training. Each method may perform differently on different time series. For example, a first method may perform well on a first time series and poorly on a second time series, while a second method may perform well on the second time series and poorly on the first time series.

Therefore, using a single prediction method presents the risk of obtaining a poor performance for some of the time series.

One solution to tackle this issue consists in using a large number of prediction methods that are known to perform well on each time series, and averaging the result.

However, this solution presents significant disadvantages:
- this solution is computationally expensive, because a large number of methods need to be executed ;
- the more methods are used, the more chances exist that at least one method provide poor results. Therefore, there is a high chance that poor results are obtained with many methods.

The document US11,063,842 is known, but fails to overcome the above mentioned issue.

There is therefore a need for a method of prediction of resource usage or physical quantities that provides, in each situation, the best possible result among a plurality of prediction method, with a reasonable computing cost.

### Summary

This disclosure improves the situation.

It is proposed a computer-implemented method comprising: extracting a feature representation of a time series of observations of bandwidth usage ; for each prediction model in a set of prediction models: using a trained error model associated with the prediction model to obtain an expected prediction error of the prediction model for said feature representation ; selecting a subset of said set of prediction models based at least on the expected prediction errors ; using said subset of prediction models to predict a future bandwidth usage from said time series of observations for a plurality of IP addresses, or IP address prefixes, respectively; allocating said plurality of IP addresses, or IP address prefixes, to a plurality of network nodes in order to balance a predicted network load across the network based on said predicted future bandwidth usage.

By "extracting a feature representation of a time series" we designate converting a representation of a time series as successive time points into features representative of the time series. The features may be predefined meaningful features such as mean, standard deviation, etc., or features automatically defined from the time series, for example though a Principal Component Analysis.

By "observation" we designate a determination of a value that actually occurred. An observation may be for example be performed by a measurement, detection, calculation based on measurements or more generally any kind of estimation of a real value. In case of resource usage, or more generally an observation relative to a computing system, an observation can be performed by reading a value in the computing system, or calculating a value based on readings in the computing system.

By "resource", we designate any kind of system resources, that is to say any physical or virtual component of limited availability in a computer or telecommunication system. A resource may for example be a computational resource such as CPU requirements, a network resource such as network throughput or bandwidth usage, memory resource, or electric consumption resource.

By "resource usage" we designate the use of a resource by a computational system over time.

By "physical quantity" we designate a material or system that can be quantified by measurement. For example, a physical quantity may be an electric current, temperature, luminous intensity, humidity, velocity, energy, force, power, pressure, thermal conductivity, etc.

By "time series of observations of resource usage or at least one physical quantity", we designate time series that represent resource usage, or physical quantity as measured over a succession of successive time stamps".

By "prediction model", we designate any model that, is able to predict a future data (for example, resource usage or physical quantity) from a historical time series of the same data. Any kind of machine learning model that can be trained by historical time series to predict future time series may be used in the course of the invention. Other kinds of model such as statistical models or regressions may be used as prediction models. In the course of this disclosure, a model may designate a kind of model with different training or parameters. For example, two models may correspond to two neural networks having the same structure but different setting of hyperparameters such as activation function.

The expected prediction error may be any indicator or coefficient able to compare predicted time series with time series representing actual observations. For example, the MSE (Mean Square Error) or MAAPE score can be used, or any other suitable coefficient.

By "lowest prediction error", we designate prediction errors representative of values that are as close as possible to the observed values. Depending upon the expression of the prediction errors, this may correspond to the lowest or highest value. For example, if MSE is used, the lowest prediction error corresponds to the lowest value (i.e the lowest Mean Square Error). On the other hand, if MAAPE score is used, then the score is normalized (from 0-worst possible prediction, 1-perfect prediction), then the lowest prediction error corresponds to the highest value of the MAAPE score.

By "predicting a future resource usage using said time series and said subset of resource usage prediction models", we designate using the subset of prediction models to predict future data (resource usage or at least one physical quantity) from the time series of historically observed data.

The selection of the subset of the prediction models allows selecting the prediction models that are expected to result in the lowest prediction error for a particular time series. The most accurate models can therefore be selected for each particular time series and even for each particular history period of a time series.

This allows obtaining a more accurate prediction of resource usage, because model that are best suited for predicting future usage from a specific historical observation are used.

The more accurate prediction of resource usage can be used for performing a more accurate resource allocation to match the expected future resource usage.

This furthermore reduces the prediction complexity, because only a subset of the models are used to perform the prediction.

In another aspect, it is proposed a software comprising instructions to implement a method according to one of the embodiments of the invention when the software is executed by a processor.

In another aspect, it is proposed a computer-readable non-transient recording medium on which a software is registered to implement a method according to one of the embodiments of the invention when the software is executed by a processor.

In another aspect, it is proposed a computing system comprising at least one processing unit configured to execute a method according to one of the embodiments of the invention.

We designate by "processing unit" an electronic component capable of performing electronic or computer calculations for a function. A processing unit can designate any type of processor or electronic component capable of performing digital calculations. For example, a processing unit can be an integrated circuit, an ASIC (from the English acronym "Application-Specific Integrated Circuit", literally in French "integrated circuit specific to an application", a microcontroller, a microprocessor, a Digital Signal Processor (DSP), a processor, a Graphical Processing Unit (GPU). A processing unit according to the invention is not limited to a particular type of calculation architecture. For example, a processor can implement a Harvard or Von Neumann type architecture.

In another aspect, it is proposed a computer software comprising instructions to implement at least a part of a method as defined here when the software is executed by a processor. In another aspect, it is proposed a computer-readable non-transient recording medium on which a software is registered to implement the method as defined here when the software is executed by a processor.

The following features, can be optionally implemented, separately or in combination one with the others:
Advantageously, said set of prediction models comprises at least two models belonging to at least two models type in a group comprising: a regression model; a neural network; a statistical model; a theta transform; a seasonal averaging of time series.

By "seasonal averaging of time series", we designate a model that model the time prediction as an average depending upon time. A seasonal averaging may be for example a daily, weekly, monthly averaging, or an averaging which separates days in the week and the week-end, days of the week.

This allows using different types of models which may behave differently depending upon the features of time series, and therefore benefit from the best model for any kind of time series.

Advantageously, the trained error model is a regression model.

A regression model is very effective at predicting a prediction error from a set of features. This therefore allows a more accurate prediction of error.

Advantageously, said subset comprises a single prediction model that exhibits the lowest prediction error; said step of using said subset of prediction models to predict the future bandwidth usage comprises using said single resource usage prediction model to predict the future bandwidth usage from said time series.

This allows selecting and using the model which is expected to provide the single most accurate prediction of the future resource usage.

Advantageously, said subset comprises a plurality of prediction models; said step of using said subset of prediction models to predict the future bandwidth usage comprises: using each of said plurality of prediction models to predict respectively a plurality of model predicted future bandwidth usages from said time series; aggregating said model predicted future bandwidth usages into said predicted future bandwidth usage.

By "aggregating said model predicted future resource usages into said predicted future resource usage", we designate a combination of the plurality of predictions of future resource from the plurality of models usage into a single aggregated prediction.

The aggregation of the prediction may be performed in different ways. For example, the predictions may be averaged at each time step.

This allows selecting and using a plurality of models which are expected to provide the most accurate predictions of the future resource usage. The aggregation of the result of the plurality of models allows avoiding the risk of an unexpectedly large error of prediction due to a single model.

Advantageously, said step of aggregating said model predicted future bandwidth usages into said predicted future bandwidth usage is performed using an aggregation method which is expected to provide the most accurate prediction according to said subset of prediction models.

This allows using the aggregating method which is best suited for the selected best models, and therefore obtain the more accurate global prediction.

Advantageously, using each of said plurality of prediction models to predict a model predicted future bandwidth usage, or using said single prediction model to predict the future bandwidth usage based on said time series comprises: training each of said plurality of prediction models, or training said single prediction model based on said time series of observations; using each of said plurality of trained prediction models to predict the model predicted future bandwidth usage, or using said single prediction model to predict the future bandwidth usage.

This allows training the selected model or models based on the observed time series of resource usage to perform the most accurate prediction of future resource usage.

Advantageously, the feature representation of the time series is obtained by applying a dimensionality reduction to time series of bandwidth usage.

By "dimensionality reduction" we designate any method that transforms a high dimensional space into a lower-dimensional space representation which retains the most meaningful features. A dimensionality reduction method may be for example a feature selection method or a feature projection method (Principal Component Analysis - PCA, Independent Component Analysis - ICA, Linear Discriminant Analysis - LDA, autoencoder, etc.

This allows the extracted features to represent the most meaningful features of the time series, and therefore allows performing the most relevant selection of the time series.

Advantageously, obtaining said subset comprises determining, for each prediction model a score based on the expected prediction error of the prediction model, and at least one further characteristic concerning an execution time or computing requirements of the prediction model.

By "at least one further characteristics of the resource usage prediction model," we designate at least one characteristics implied by using the model. Such at least one characteristics may comprises at least one of:
- a training time of the model ;
- a prediction time of the model ;
- a memory consumption of the model ;
- an optimization time of the model ;
- Etc.

The at least one further characteristics of the resource usage prediction model may have been collected during at the same time as training of the error prediction model associated with the resource usage prediction model.

This allows selecting the most relevant resource usage prediction models based on a global score that takes into account the expected prediction error, but also other meaningful characteristics of the resource usage prediction models.

As stated above, the method further comprises allocating at least one resource based on said predicted future bandwidth usage.

By "allocating at least one resource based on said predicted future resource usage", we designate a step of allocation of resources to match the resource usage. This may comprise the definition of resource to use and/or the assignation of resource usages to different resource.

This allows performing an effective allocation of the resource to match the predicted resource usage.

As stated above, using said subset of resource usage prediction models to predict bandwidth usage is performed for a plurality of IP addresses, or IP address prefixes, respectively; said step of allocating the resource comprises allocating said plurality of IP addresses, or IP address prefixes, to a plurality of network nodes in order to balance a predicted network load across the network.

By "network load", we designate a ratio between the bandwidth capacity of an element of the network (link or node) and its bandwidth usage.

By "balancing network load", we designate performing a prediction of network load among the network nodes, in order that the network load is as homogeneous as possible across the network.

The homogeneity of the network load can be calculated for example on various time basis (e.g daily basis, hourly basis, weekly basis...), or for specific cases such as a worst case imbalance over the future usage prediction.

This allows performing allocating IP addresses, or IP address prefixes, over network nodes in order that the predicted network load in the network is as balanced as possible

This improves the configuration of the network by increasing the resilience of the network to node failures, because in case of unexpected transfer of network traffic from a first, failed, node to a second node, the risk of overload of the second node is lowered.

Advantageously, the method comprises, prior to said step of extracting the feature representation of the time series and for each prediction model in the set of prediction models: for each training time series comprising a training set and a validation set in a set of training time series of observations of said bandwidth usage: training the prediction model using the training set ; computing a prediction error of the trained prediction model on the validation set ; extracting said feature representation of the training set ; enriching an error training set with an association between said prediction error and said feature representation of the training set ; training an error model using said error training set ; associating said trained error model to said prediction model.

By "training set", we designate a first split of the time series which is used to train the usage prediction models.

By "validation set", we designate a second split of the time series which is used to determine a prediction error.

By "training the resource usage prediction model using the training set", we designate adapting the parameters of the resource usage prediction model to best match the training set. The training may comprise defining the values of parameters to match the training set. A trained model may in particular model efficiently:
- cyclic variations of the resource usage (e.g hourly, daily, weekly variations of the resource usage, etc.);
- global trends of the resource usage (e.g general increase/decrease of the resrouce usage;
- uncertainty of prediction of the resource usage;
- etc.

In practice, any training method that allows defining values of parameters of a model to improve the modeling of a training set can be used. For example, linear regression, or, in case of a neural network, gradient descent, may be used.

The time series may be split into two consecutive parts, the first part being the training set and the second part being the validation set.

By "prediction error", we designate a value that represents how accurate is the prediction performed by the trained model. The computation of the prediction error may comprise predicting by the trained model the values of the validation set, then comparing the predicted values to the actual values of the validation set.

By "error training set", we designate any kind of dataset that allows training an error prediction model, that is to say any model that respectively associates to different sets of features prediction errors.

This allows associating to resource usage prediction model a error prediction model which is able to predict the error that may be caused by the resource usage prediction model depending upon the features of the different time series.

This therefore allows predicting the performance of the resource usage prediction model in a given scenario.

These features are also advantageous as such, and it is also proposed a method comprising the steps described above alone.

It is therefore also proposed a computer implemented method comprising, for each prediction model in a set of prediction models: for each time series comprising a training set and a validation set in a set of time series of observations of a resource usage or at least one physical quantity: training the prediction model using the training set; computing a prediction error of the trained prediction model on the validation set ; extracting a feature representation of the training set; enriching an error training set with an association between said prediction error and said feature representation of the time series; training an error model using said error training set; associating said trained error model to said prediction model.

Advantageously, the method further comprises: when a prediction period has elapsed : updating the time series of observations with observations of resource usage or said at least one physical quantity during the prediction period ; going back to said step of extracting the feature representation of the time series of resource usage or said at least one physical quantity ; when a training period has elapsed : updating the set of training time series with observations of resource usage or said at least one physical quantity during the training period ; going back to said step of training the prediction model.

This allows continuously adapting the training set training and using the models to predict resource usage. Therefore, this allows continuously obtaining a prediction of resource usage that is adapted over time to the observed resource usage.

### Brief Description of Drawings

Other features, details and advantages will be shown in the following detailed description and on the figures, on which:
**Fig. 1**

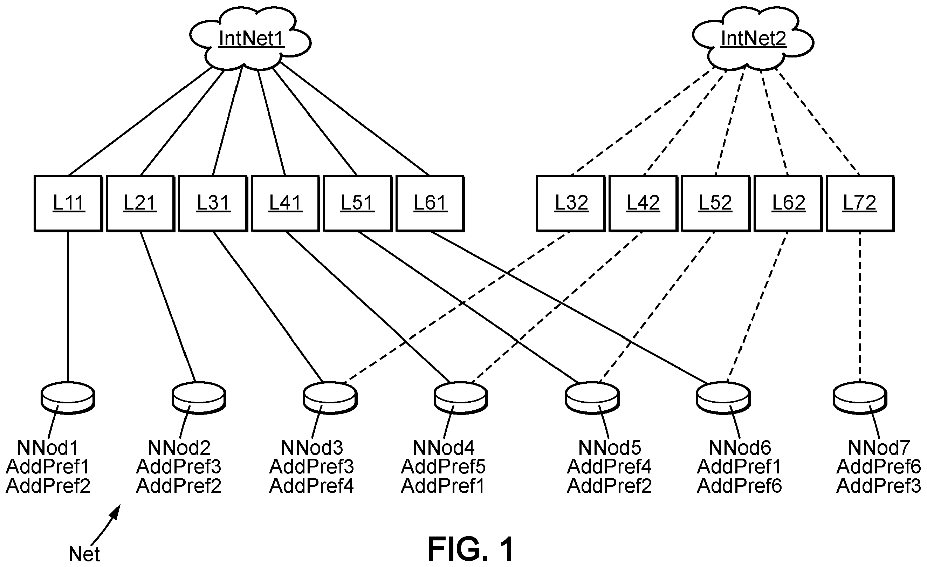

   [Fig. 1] is an example of a national network connected to two international telecommunication networks for the management of load on peering links which the invention can be implemented.
**Fig. 2**

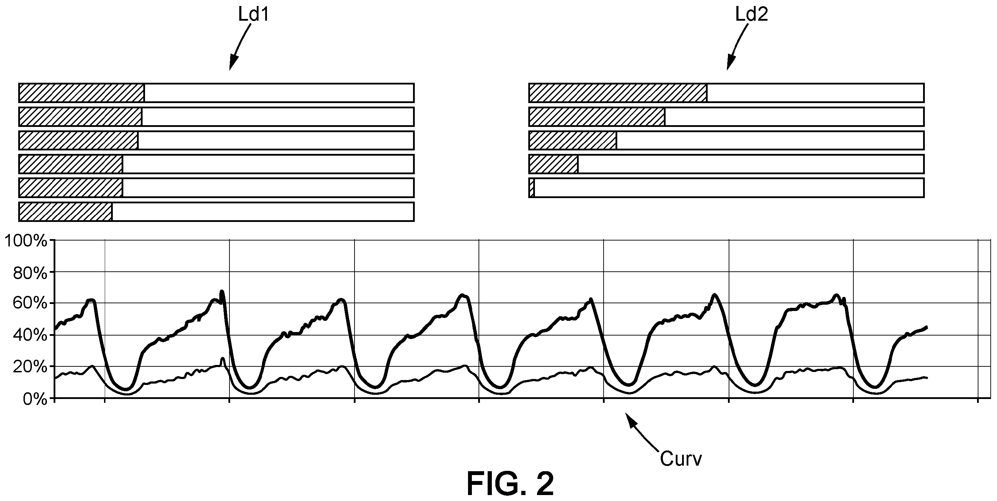

   [Fig. 2] is an example of measurements of traffic loads on peering links for the routing management of which the invention can be implemented.
**Fig. 3**

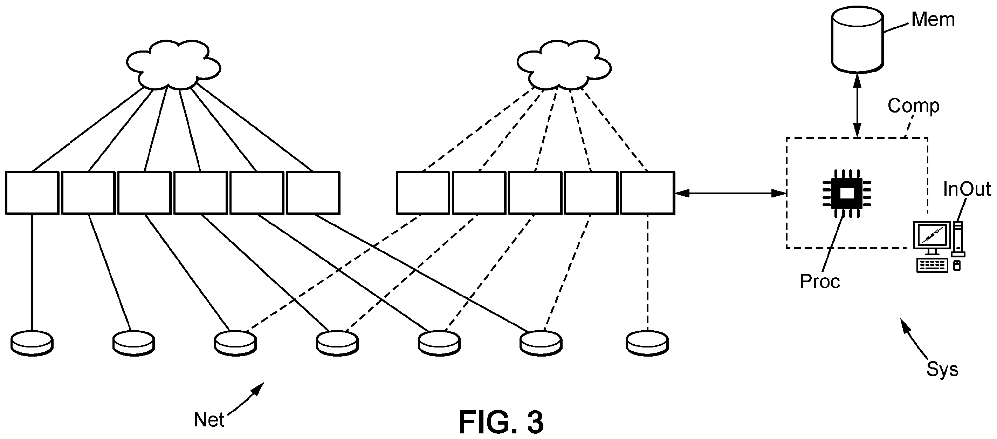

   [Fig. 3] is an example of computing system according to a number of embodiments of the invention.
**Fig. 4**

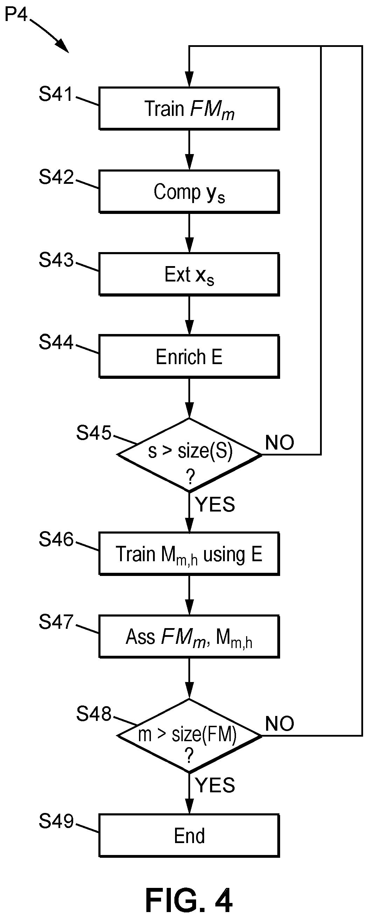

   [Fig. 4] is an example of computer-implemented method to train error models and associate the error models to a prediction model according to a number of embodiments.
**Fig. 5**

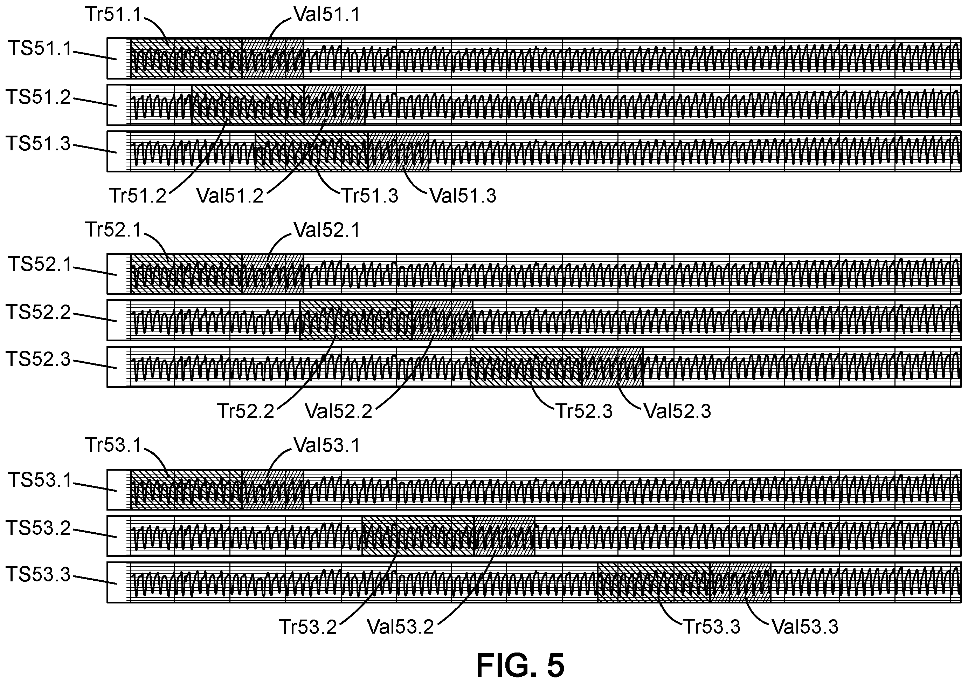

   [Fig. 5] is an example of training time series of observations of network load according to an embodiment.
**Fig. 6**

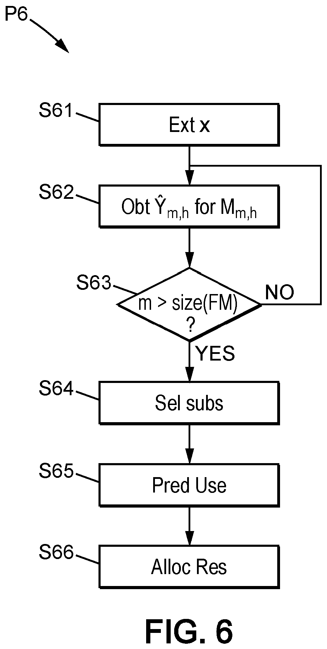

   [Fig. 6] is an example of a computer-implemented method to predict a future resource usage or at least one physical quantities in a number of embodiments of the invention.
**Fig. 7**

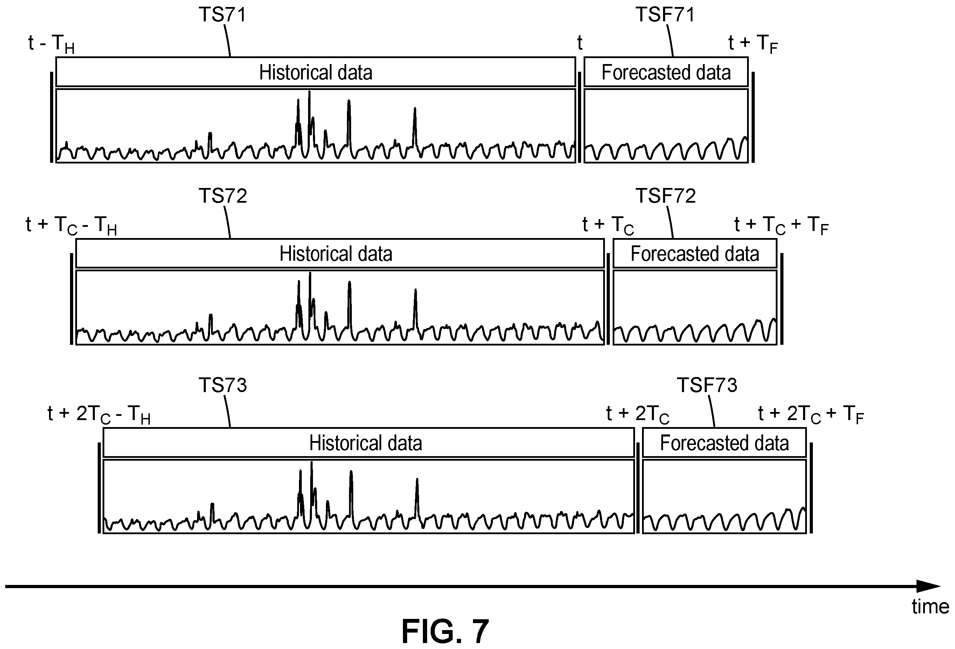

   [Fig. 7] is three examples of time series of observations, and predictions performed based on the observations, in 3 moments of time respectively.
**Fig. 8**

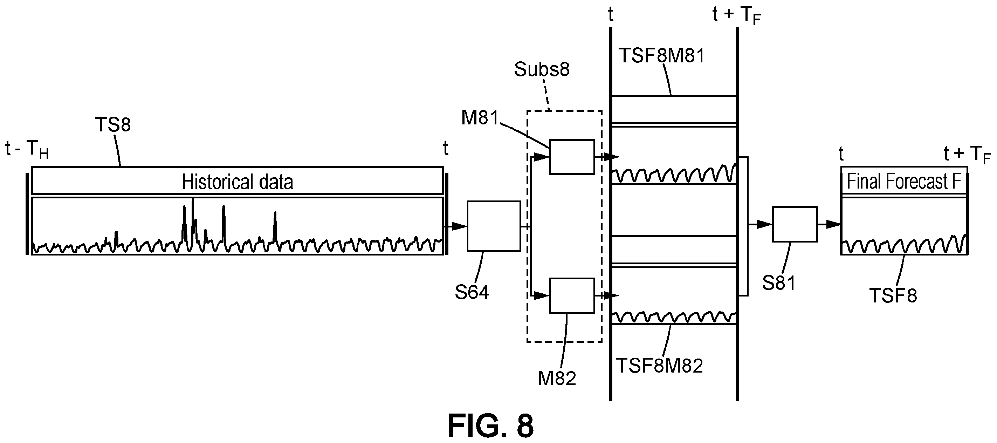

   [Fig. 8] is an example of prediction based on an aggregation of a plurality of predictions by a plurality of prediction models respectively.
**Fig. 9**

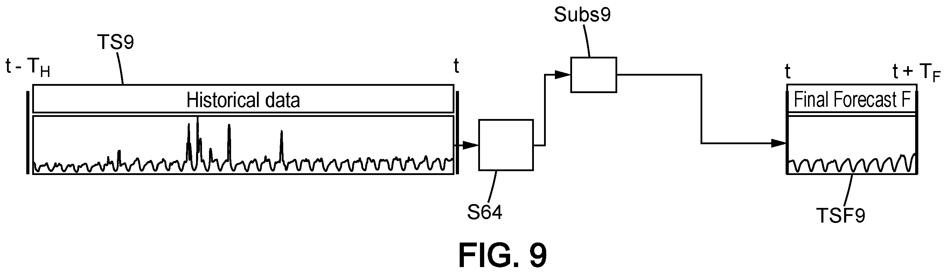

   [Fig. 9] is an example of prediction based on an aggregation of a plurality of predictions by a single prediction model.
**Fig. 10**

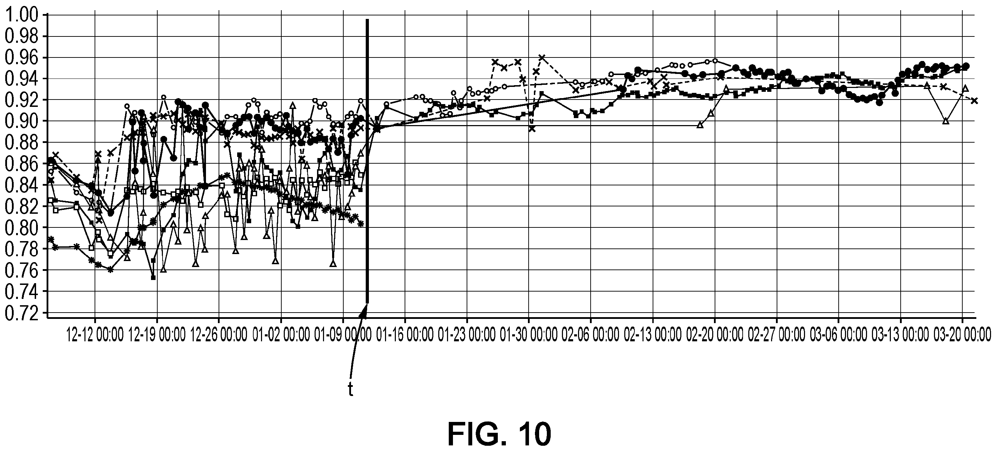

   [Fig. 10] is a first example of selection of prediction models according to an embodiment.
**Fig. 11**

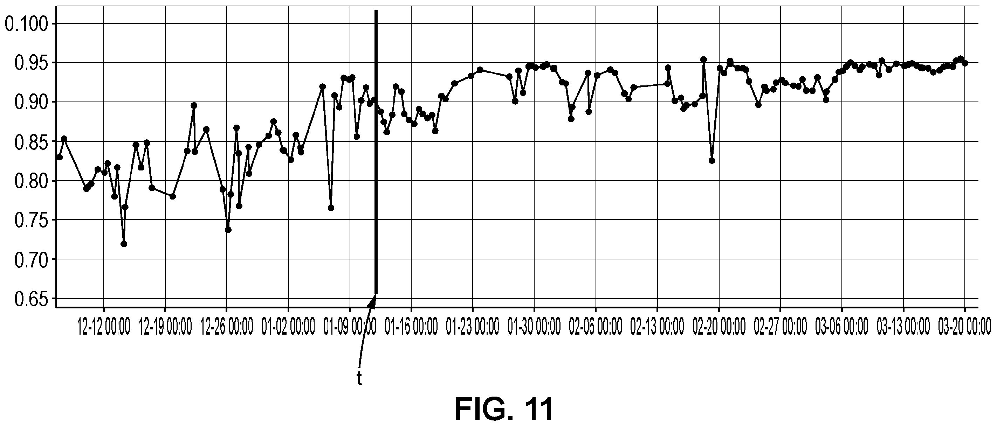

   [Fig. 11] is a second example of selection of prediction models according to an embodiment.
**Fig. 12**

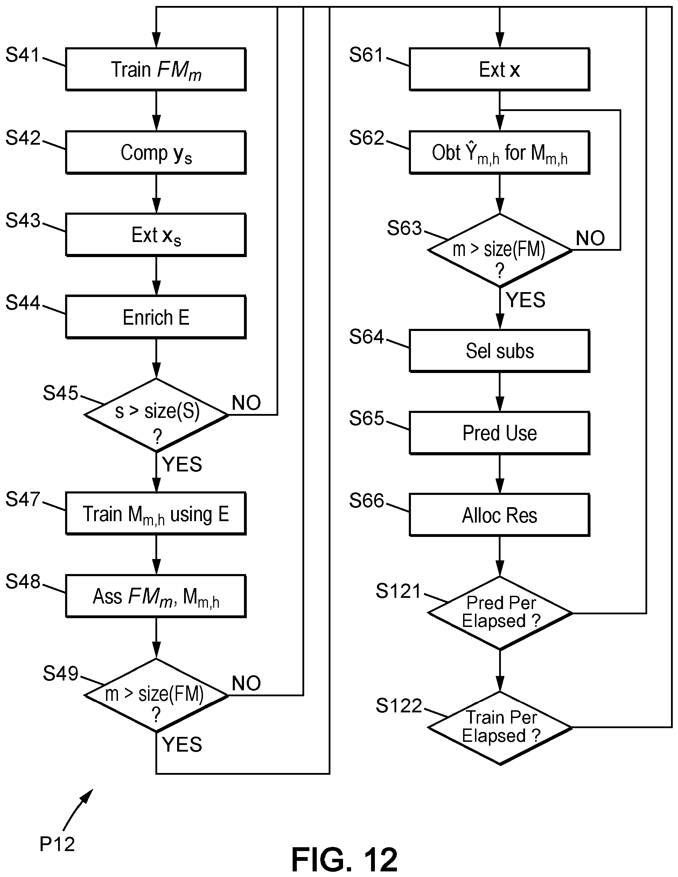

   [Fig. 12] is an example of a computer-implemented method to predict periodically a future resource usage or at least one physical quantities in a number of embodiments of the invention.
**Fig. 13**

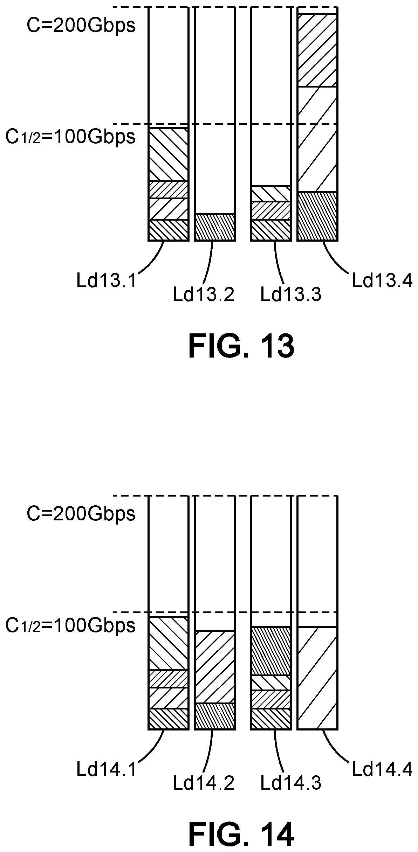

   [Fig. 13] is an example of a load balance in a network before application of the invention in a number of embodiments.
**Fig. 14**
   [Fig. 14] is an example of a load balance in a network after application of the invention in a number of embodiments.

### Description of Embodiments

It is now referred to figure 1.

Figure 1 represents a national network connected to two international telecommunication networks for the management of load on peering links which the invention can be implemented.

The first telecommunication network comprises:
- an international network IntNet1, which serves as a entry point for international communication. The network IntNet1 is a network that represents a set of nodes, here depicted as a single object for simplicity;
- 6 national nodes:
   o NNod1 serving two IP address prefixes AddPref1 and AddPref2;
   o Nnod2 serving two IP address prefixes AddPref3 and AddPref2;
   o Nnod3 serving two IP address prefixes AddPref3 and AddPref4;
   o Nnod4 serving two IP address prefixes AddPref5 and AddPref1;
   o Nnod5 serving two IP address prefixes AddPref4 and AddPref2;
   o Nnod6 serving two IP address prefixes AddPref1 and AddPref6.

Each IP address may serve a single customer, or a plurality of customers. The portion of the network traffic which is related to an IP address prefix can be called as a "fraction of traffic" or "fraction". An IP address prefix is a collection of IP addresses having the same prefix.

A configuration of a network consists in defining links between the nodes and IP addresses, in order to define the paths through which fraction of traffic transits to which node. For example, each national node can be associated to one or more IP addresses or address prefixes, so that communication to or from the addresses or address prefixes associated with a national node transit through this national node.

In the example of figure 1, the first telecommunication network is configured with the following links:
- Link L11 between the international network IntNet1 and the national node Nnod1;
- Link L21 between the international network IntNet1 and the national node Nnod2;
- Link L31 between the international network IntNet1 and the national node Nnod3;
- Link L41 between the international network IntNet1 and the national node Nnod4;
- Link L51 between the international network IntNet1 and the national node Nnod5;
- Link L61 between the international network IntNet1 and the national node Nnod6.

Therefore, for example, the fraction of traffic related to the IP addresses Addpref1 and AddPref2 that passes through NNod1 transits through link L11 between the nodes IntNet1 and NNod1.

Of course, this example is provided by means of example only, and the network can be reconfigured by modifying the links. For example, a node may serve more than one IP address. For example, the node Nnod1 may serve the IP address prefixes AddPref1, AddPred2 and AddPref3.

The reconfiguration of the network can be performed for example for balancing the traffic among the nodes. links Indeed, the traffic that is flowing through a link is the sum of the traffics of the IP addresses that are served by the nodes at the output of the link. A reconfiguration of the network therefore allows adjusting the traffic that is supported by each node and link. A reconfiguration of the network may be performed for example by modifying the links between the nodes and/or the associations between nodes and IP addresses or IP address prefixes.

The second telecommunication network comprises the following nodes and links:
- an international network IntNet2, which serves as an entry point for international communication;
- Nnod3 serving two IP address prefixes AddPref3 and AddPref4;
- Nnod4 serving two IP address prefixes AddPref5 and AddPref1;
- Nnod5 serving two IP address prefixes AddPref4 and AddPref2;
- Nnod6 serving two IP address prefixes AddPref1 and AddPref6;
- Nnod7 serving two IP address prefixes AddPref6 and AddPref3.
- Link L32 between the international network IntNet2 and the national node Nnod3;
- Link L42 between the international network IntNet2 and the national node Nnod4;
- Link L52 between the international network IntNet2 and the national node Nnod5;
- Link L62 between the international network IntNet2 and the national node Nnod6;
- Link L72 between the international network IntNet2 and the national node Nnod7.

Of course, the example of figure 1 is provided by means of example only of telecommunication networks whose load can be balanced by a method according to the invention. Other networks may be balanced by a method according to the invention. In particular, typical communication networks have a much higher number of nodes and serve a much higher number of IP addresses than the networks represented in figure 1.

It is now referred to the figure 2.

The figure 2 represents an example of measurements of traffic loads on peering links for the routing management of which the invention can be implemented.

The figure represents more specifically an example of measurements of traffic load on peering links between national nodes of the two international networks represented in figure 1.

The traffic can be calculated by dividing the traffic which is carried by a peering link by the capacity of the link. The traffic can thus be represented as a fraction or percentage.

The curves Curv represent the evolution of traffic load for different links during a period of a plurality of successive days.

The graph Ld1 represent the maximal observed load during the period for each of the 6 peering links of the first network IntNet1 represented in figure 1.

The graph Ld2 represent the maximal observed load during the period for each of the 5 peering links of the second network IntNet2 represented in figure 1.

The maximal observed load is represented, for each peering link, as a horizontal bar whose width is proportional to the load.

It can be observed that the load is much better balanced in the first network IntNet1 than in the second network IntNet2. For example, the maximal loads represented, for the first network, in the graph Ld1, range from 49,7 to 65,2%, while the maximal loads represented, for the second network, in the graph Ld2, range from 2,5 to 67,9%.

An imbalance of the traffic load between the links of a network can cause a number of problems.

For example, in case of failure of a node, the traffic, which is handled by a first, failed node is usually transferred to a second, available node. In case of strong imbalance of the traffic load between the nodes, it is for example more likely that the traffic handled by the second node is already very high, and that the second node is not able to handle the traffic of the first node in addition.

It is therefore desirable in telecommunication network that the traffic handled by the different nodes and links of a network is as balanced as possible.

As shown by the curves Curv, the traffic load varies greatly in time. It is therefore desirable to obtain a prediction of traffic loads in order to perform a predictive balancing of the nodes by reconfiguring the network when necessary.

At a more detailed level, it is possible to predict the traffic fraction for each address prefix, so that the traffic at a link or node can be calculated as the sum of the traffic fractions of the address prefixes that are served by the link or node. This makes it possible to modify the associations between nodes and address fractions, in order to improve the traffic balance among nodes and links.

As will be shown in the remaining of this disclosure, the invention can be used for improving the balance of traffic load in a telecommunication networks. It shall however be noted that this is only an example of application of the invention, and that the invention can more generally be applied to any situation that requires a prediction of resource usage or physical quantities.

It is now referred to figure 3.

Figure 3 represents an example of computing system Sys in a number of embodiments of the invention.

The computing system Comp is intended to manage the configuration of a telecommunication network, for example one of the networks Net represented in figure 1.

To this effect, the computing system comprises at least one computing device Comp comprising at least one processing unit Proc.

The computing device Comp may have access to at least one memory Mem.

The memory Mem may be any kind of data storage. It may be comprise volatile memory such as Random Access Memory (RAM), Dynamic Random-Access Memory (DRAM), Static Random Access Memory (SRAM) and/or non volatile memory such as hard disk drives, optical disks, magnetic tapes, ferroelectric RAM,etc.

Although it is represented in the figure 3 outside the computing device Comp, the memory Mem may, according to various embodiments of the invention, be located either within the at least one computing device Comp, and thus be an internal memory, or outside the computing device Comp, which is for example the case if the memory Mem is located in a server connected to the computing device Comp.

Although figure 3 represents a single computing device, single processing unit and single memory, according to various embodiments of the invention, a computing system of the invention may comprise a plurality of computing units, possibly located in a plurality of computing devices, and/or a plurality of memories. If the computing system comprises a plurality of computing units, the plurality of computing units may be a plurality of core of a multi-core processor a plurality of processors, etc. This may allow performing distributed computing.

The computing system Comp may also be provided with input and/or output user interfaces InOut. The user interfaces InOut may comprise one or more of the following interfaces:
- input user interfaces:
   ∘ one or more keyboard ;
   ∘ one or more mouse ;
   ∘ one or more microphone coupled with sound and/or voice analysis engine ;
   ∘ one or more camera coupled with sound and/or visual analysis engine ;
   ∘ etc.
- output user interfaces:
   ∘ one or more external and/or internal screens, some of which may be tactile screens ;
   ∘ internal and/or external loudspeakers ;
   ∘ etc.

The computing system may be configured for the prediction of time series of resource usage or physical quantities. To this effect:
- the at least one memory Mem may be used to store one or more prediction and/or error models ;
- the at least one processing unit may be configured to execute a method as disclosed by the present disclosure.

In a number of embodiments of the invention, the computing system Comp may further be configured to perform an action based on the prediction of time series of resource usage or physical quantities.

In the example of figure 3, the computing system is for example able to reconfigure routing for the network topology presented in figure 1, by causing a modification of BGP routing on the peering links of the network in response to predictions of traffic load.

However, this is provided by means of non-limitative example only of possible actions that may be performed by the computing system Sys. For example, the computing system Sys may perform one or more of the following actions:
- regulating heating / cooling systems in response to predictions of temperature ;
- activating an air circulation system in response to predictions of humidity ;
- requesting computing resource in response to predictions of computing usage ;
- requesting memory resources in response to predictions of memory usage ;
etc.

It is now referred to figure 4.

The figure 4 represents a computer-implemented method P4 to train error models and associate the error models to a prediction model according to a number of embodiments.

The method represented in claim 4 may be executed prior to the method represented in figure 6, or as a separate embodiment.

The method P4 applies to a plurality of prediction models in a set FM of prediction models. Each model of index m is noted FMₘ.

The set of prediction models comprises at least two models. The prediction models may belong to different model types, such as for example regression, models, neural networks, statistical models, theta transforms, seasonal averaging of time series.

The set of prediction models may comprise a plurality of models of the same type and / or models of different types. A plurality of models of the same type may for example comprise two neural networks having a different structure and /or a different training and thus different values of parameters.

The method P4 takes as input training time series of observations of a resource usage or at least one physical quantity.

Figure 5 provides an example of training time series of observations of network load.

In the example of figure 5, a global time series of observation of network load is split in different set of time series. In each case, the time training time series comprises a training set and a validation set which comprises observations that occur immediately after the observations in the training set.

In the example of figure 5, each of the 9 lines represents the global time series of observations of network load, and the parts of the time series that serve as training and validation set. The global time series represents the value of network load as a function of time.

In the example of figure 5, the global time series is therefore used to generate the training time below :
- time series TS51.1, comprising the training set Tr51.1, and the validation set Val51.1 ;
- time series TS51.2, comprising the training set Tr51.2, and the validation set Val51.2 ;
- time series TS51.3, comprising the training set Tr51.3, and the validation set Val51.3 ;
- time series TS52.1, comprising the training set Tr52.1, and the validation set Val52.1 ;
- time series TS52.2, comprising the training set Tr52.2, and the validation set Val52.2 ;
- time series TS52.3, comprising the training set Tr52.3, and the validation set Val52.3 ;
- time series TS53.1, comprising the training set Tr53.1, and the validation set Val53.1 ;
- time series TS53.2, comprising the training set Tr53.2, and the validation set Val53.2 ;
- time series TS53.3, comprising the training set Tr53.3, and the validation set Val53.3.

The time series presented in figure 5 are provided by means of non limitative example only of training time series in a number of embodiments of the invention, and different time series may be used. For example:
- a global time series may represent other quantities than a network load, such as other resource usages or physical quantities;
- the training and validation sets may be created differently from the global time series. For example, the durations and positions of the training and validation sets may vary.

The figure 5 provides an example of training time series of network load. However, this is provided by means of non-limitative example only, and other training time series representative of other data such as other resource usages or physical quantities may be implemented.

Referring back to figure 4, the steps S41 to S44, an error for the model is calculated for each training time series of index s in a set S of training time series

Coming back to figure 4, the method P4 comprises, for each training time series and prediction model, a first step S41 of training the prediction model using the training time series.

The method P4 further comprises a second step S42 of computing a prediction error yₛ of the trained prediction model on the validation set.

The prediction error may belong to different types of prediction error, such as for example MSE or MAAPE. The prediction error can generally be calculated by predicting values in the validation set and comparing predicted values and real observations in the validation set.

The method P4 further comprises a step S43 of extracting a feature representation xₛ of the training set.

As highlighted above, this step may comprise converting a representation of a training set as successive time points into features representative of the training set. The features may be predefined meaningful features such as mean, standard deviation, etc.,

For example, the feature representation of the time series can be obtained by applying to the time series a dimensionality reduction method, for example though a Principal Component Analysis.

Different number of features may be used. For example, a number of features as high as 720 can be used for a feature representation of network load.

The method P4 further comprises a fourth step of enriching an error training set E with an association between said prediction error and said feature representation of the training set.

The error training set is a training set that associates to sets of features of time series an error, and thus allows training a model to predict an error according to the values of features of time series.

The steps S41, S42, S43 and S44 are repeated for all the training time series of a set S of training time series. Thus, at the end of step S44, the method P4 may comprise:
- a step S45 to verify if all the training time series have been used or not, that is to say if the index s of the training time series is equal to or higher than the size of the set of training time series S ;
- if the current time series was the last training time series of the set, the next step S46 is executed ;
- otherwise, the steps S41 to S44 are repeated with the next training time series in the set of training time series.

It shall be noted that the step S44 is provided by means of example only of an implementation allowing to process all the training time series. The invention is however not restricted to this example, and any steps allowing to process all the time series of a set of time series may be used in a number of embodiments of the invention.

At the output of the successions of steps S41 to S44, an error training set E is therefore built which associates, to the different feature representations of the training time series, prediction errors that are generated by the prediction model.

The method P4 then comprises a sixth step S46 of training an error prediction model M_{m,h} using the error training set E.

The error model may be any kind of model that is able predict an error according to a feature representation. For example, the error model may be a regression model.

At the output of step S46, the trained error model is therefore able to predict a prediction error of the prediction model from a feature representation of a time series.

The method P4 then comprises a seventh step S47 of associating the trained error model M_{m,h} with the prediction model FMₘ.

The method P4 then comprises an eighth step S48 of verifying if all the prediction models have been used or not, that is to say if the index m of the prediction model is equal to or higher than the size of the set FM of prediction models.

If it is not the case, the index m is incremented, and the steps S41 to S48 are executed for the next prediction model.

Otherwise, all the prediction models FMₘ are associated with a trained error model M_{m,h}, the method ends at step S49.

It shall be noted that the step S48 is provided by means of example only of an implementation allowing to process all the prediction models. The invention is however not restricted to this example, and any steps allowing to process all the prediction models of a set of prediction models may be used in a number of embodiments of the invention.

At the end of the method, different actions may be performed.

For example, the prediction models, and trained error models can be stored for future use.

They can also be used directly for performing predictions of time series.

It is now referred to figure 6.

Figure 6 represents a computer-implemented method P6 to predict a future resource usage or at least one physical quantities in a number of embodiments of the invention.

The method P6 receives as input a time series of observations of resource usage, or at least one physical quantity, and aims at predicting, from said time series of observations, a future resource usage or at least one physical quantity.

The method P6 may for example aim at predicting, at a given moment of time, resource usage or at least one physical quantity in a near future based on the latest observations.

For example, in figure 7, predictions are performed periodically every time period T_{c}. At each prediction, a time window of values having a duration T_{f} is predicted based on a time window of observations having a duration T_{H}.

In the example of figure 7, the observed and predicted data represents network load. As already stated, this is provided by means of non-limitative example only of a data to predict in a number of embodiments of the invention, and the invention may be used to predict any resource usage or physical quantity in the near future based on previous observations.

The example of figure 7 represents predictions and observations of bandwidth usage on a link. As stated previously, the invention is however not restricted to this example, and may be applied to other resource usages, or physical quantities.

In the examples of figure 7, three successive times are represented :
- a first time t, wherein a time series TS71 of observations of bandwidth usage on a link in a time window [t - T_{H}; t] is used to perform predictionsTSF71 of bandwidth usage on a link in a time window ]t; t + T_{F}];
- a second time t + T_{C}, wherein a time series TS72 of observations of bandwidth usage on a link in a time window [t + T_{C} - T_{H}; t + T_{C}] is used to perform predictionsTSF72 of bandwidth usage on a link in a time window ]t + T_{C}; t + T_{C} + T_{F}] ;
- a third time t + 2 * T_{C}, wherein a time series TS73 of observations of bandwidth usage on a link in a time window [t + 2 * T_{C} - T_{H}; t + 2 * T_{C}] is used to perform predictionsTSF73 of bandwidth usage on a link in a time window ]t + 2 * T_{C}; t + 2 * T_{C} + T_{F}].

The time series of observations may be referred to as "historical data", while the time series of prediction may be referred to as "forecasted data".

Referring back to figure 6, we will now explain in more details how predictions are performed by the method P6.

The method P6 comprises a first step S61 of extracting a feature representation of the time series of observations. The feature representation can be noted x. This step is similar to the step S43 of method P4.

The method P6 then calculates an expected a prediction of error for each prediction model FMₘ in a set FM of prediction models. The set FM may typically be obtained by the method P4, and each model FMₘ of index m in the set FM is associated with an error prediction mode M_{m,h}.

To this effect, the method P6 thus goes through the set FM, and, for each resource prediction model FMₘ of index m, comprises a step S62 of using the trained error model M_{m,h} associated with the resource prediction FMₘ model to obtain an expected prediction error *ŷ*_{*m*,*h*} of the resource prediction model for said feature representation.

The method P6 may then comprises a third step S63 of verifying if the index m of the model is higher than or equal to the size of the set FM, that is to say, if all the prediction models have been processed. If it is not the case, m is incremented and the step S62 will be repeated until all the prediction models have been processed. Otherwise, if all the models have been processed, the method goes through a fourth step S64.

It shall be noted that the step S63 is provided by means of example only of an implementation allowing to process all the prediction models. The invention is however not restricted to this example, and any steps allowing to process all the prediction models of a set of prediction models may be used in a number of embodiments of the invention.

When all the prediction models are processed, an expected prediction error is calculated for each prediction model. It is worth noting that the expected prediction error is performed based upon the features of the time series of observations, that is to say represents the expected error of each model in the current situation.

The method P6 then comprises a fourth step S64 of selecting a subset of the prediction models based at least on the expected prediction errors.

This step may thus consist in selecting a single prediction or a plurality of prediction models that are considered as the best models for performing the prediction in the instant case.

The selection of the models may be performed in different ways.

A single prediction model, or a plurality of prediction models may be selected.

In general, the models can be ranked according to a performance score.

For example, the performance score can be the expected prediction error. In such case, the lowest the expected prediction error, the best the prediction model is considered to be.

The performance score may also be calculated as a combination of the expected prediction error and at least one further characteristic, in order to consider other meaningful characteristics of the model.

The other at least one further characteristic may comprise at least one of :
- a training time of the model ;
- a prediction time of the model ;
- a memory consumption of the model ;
- an optimization time of the model ;
- Etc.

More generally, any meaningful characteristic of the model may be used for the determination of the performance score. In particular, the characteristics relative to an execution time or computing requirements to execute the prediction model may be used.

The at least one further characteristic may have been collected in the same time as the training of the error model, for example during the execution of a method such as the method P4.

When a plurality of prediction models is selected, they may be selected according to different conditions:
- a predefined number of models that exhibit the best performance score may be selected ,
- all the models that have a performance score higher than a predefined threshold may be selected ;
- etc.

The method P6 further comprises a fifth step S65 of using the subset of prediction models to predict a future resource usage or at least one physical quantity from said time series of observations.

This step consists in using the prediction model or plurality prediction models in the subset selected at step S64 to perform a prediction of future data based on the previously performed observations. For example, this step S65 may comprise predicting forecasted data such as the times series TSF71, TSF72 and TSF73 from previously performed observations such as the historical data TS71, TS72 and TS73 respectively.

For each model in the subset, the prediction of the forecasted data may be performed by training the model on the time series of observations, then using the trained model to predict future data. For example, a prediction model may be:
- trained on the time series of observations TS71 to predict the time series TSF71 ;
- trained on the time series of observations TS72 to predict the time series TSF72 ;
- trained on the time series of observations TS73 to predict the time series TSF73 ;
- etc.

As already stated, this allows obtaining an accurate prediction, because the selected models are expected to provide a low error in a given situation.

Meanwhile, a single or only few models need to be executed to perform the predictions. Therefore, the method P6 has a low complexity.

We are now referring to figure 8.

Figure 8 represents an example of prediction based on an aggregation of a plurality of predictions by a plurality of prediction models respectively.

In the example of figure 8:
- At step S64, a plurality of models is selected. In the example of figure 8, two models M81 and M82 are selected ;
- Each of the selected models is used to perform a prediction of the forecasted data. In the example of figure 8, a subset Subs8 comprising the two models M81 and M82 are used for performing the predictions TSF8M81 and TSF8M82 respectively. The predictions TSF8M81 and TSF8M82 can be called "model predicted future resource usages or at least one physical quantity" or "model forecasts";
- The method comprises a step S81 of aggregating the model forecasts into the final forecast. In the example of figure 8, the two model forecasts TSF8M81 and TSF8M82 are aggregated into the final forecast TSF8.

The aggregation at step S81 may be performed in different ways. For example, the final forecast may be an average or weighted average of the model forecasts at each time step.

According to different embodiment of the invention, a single predefined aggregation method may be used, or an aggregation method may be selected based on the subset of prediction models. Selecting the aggregation method based on the subset of prediction models allows using the aggregation method which is expected to provide the best results according to the selected models, if the aggregation methods are expected to be more or less adapted to the different models.

Therefore, the best models are used for prediction, but using a plurality of models allows avoiding a large error, if the error caused by a single model is higher than expected.

It is now referred to figure 9.

In the example of figure 9, the subset Subs9 selected at step S64 comprises a single model, for example the model that exhibits the best performance score, which may correspond to the lowest prediction error among all the models of the set of prediction models.

The single best model selected in the subset Subs9 is therefore used to predict directly the final forecast; without needing to perform an aggregation of forecasts.

Therefore, the single best model is used for prediction.

Referring back to figure 6, the method P6 may comprise a step S66 using the predictions performed at step S65 to perform an action.

For example, if the prediction is relative to at least one physical quantity, the action may be related to the predicted quantity. For example:
- Heating/cooling devices may be controlled according to predictions of temperature ;
- Ventilation devices may be controlled according to predictions of humidity ;
- The load of a CPU can be controlled according to predictions of CPU temperature, in order to avoid excessive CPU heating ;
- Etc.

If the prediction is relative to a resource usage, the step S66 may comprise allocating at least one resource based on the predicted resource usage. For example, this may comprise the allocation of resource to use and/or the allocation of tasks to resources. The allocation of resource based on predictive future resource usage may for example comprise:
- the assignation of computing tasks to computing resources, so that the computing resources are expected to be sufficient to execute the computing tasks ;
- the reservation of computing resources / memory resources / network resrouces to match a predicted future computing load / memory load / network load ;
- the assignation of IP addresses to network nodes to balance the expected network usage over the network nodes ;
- Etc.

In an example wherein the method P6 aims at performing load balancing, a predicted bandwidth usage is performed for a plurality of IP addresses respectively, and the step S66 of allocating the resource comprise allocating IP addresses to network nodes to balance a predicted network load over the plurality of network nodes.

Indeed, the predictions of bandwidth usage for each IP address allows determining a bandwidth usage at a node depending upon the IP addresses which are served by the nodes. It is this possible to determine the predicted load of each node or link for a given network configuration and adjust the network configuration to balance the load.

The homogeneity of the network load can be calculated for example on various time basis (e.g daily basis, hourly basis, weekly basis...), or for specific cases such as a worst case imbalance over the future usage prediction.

Link load is a traffic bit rate carried by the link divided by the link capacity (speed). For example, if we have a link of 100Gbps which at a given moment carries 35Gbps, so load is 0.35 or 35%. As network consists of set of links, network load is defined in various manner, as a sum of bit rates on all links divided by sum of links' capacities or the average load over links. A network may comprise links of different capacities, for example links of 100Gbps, 200Gbps, 400Gbps, etc.

A node load (for example the load at a router or switch) can be defined in various manners depending upon the needs: it may for example be the sum of bit rates on all links connected to the node divided by sum of the links' capacities, sum of bit rates of total traffic incoming to the node divided by traffic switching/forwarding capability (e.g. 550Gbps / 1200Gbps, where 1200Gbps is the maximum bit rate the node can switch/forward and it can be lower than the total links' capacity connected to the node).

Having predicted load in time it is possible to propose proactive network reconfiguration balancing the load on network elements. Such reconfigurations usually concern changing configuration of traffic routing, for example through routing protocols such as BGP, IS-IS, OSPF, MPLS, etc.).

The load can be balanced in different ways. For example, a Gini index of the nodes and/or link loads can be maximized - a Gini index ranges from 0 (perfect equality) to 1 (perfect inequality). More generally, the network configuration can be modified in order to optimize an indicator of balance or equilibrium.

It is now referred to figures 10 and 11.

Figures 10, and 11 represents respectively 2 examples of selection of prediction models according to an embodiment of the invention.

Each of the two figures represents the evolution of a forecast score for a plurality of models, the best scores corresponding to high values.

Figures 10 represents an example wherein:
- on the left of the vertical bar, before a time t, all the models of the sets are used. As can be seen, the models have very different performances;
- on the right of the vertical bar, after a time t, a subset of models is selected using a method according to the invention. As can be seen, the selected models have a performance much higher than the average.

Figure 11 represents the evolution of a forecast score of an aggregated prediction:
- on the left of the vertical bar, before a time t, the predictions of all the models of the sets are aggregated. As can be seen, the performance score of the aggregated results varies greatly;
- on the right of the vertical bar, after a time t, only the predictions of a subset of models selected by a method according to the invention are aggregated. As can be seen, the aggregated result becomes much better, and much more stable.

These examples demonstrate the ability of the method according to the invention to improve the predictions.

It is now referred to figure 12.

The method P12 is a computer-implemented to predict periodically a future resource usage or at least one physical quantities in a number of embodiments of the invention.

To this effect, it performs iterative predictions on a first periodicity, and updates the error models on a second periodicity.

For example, it may comprise all the steps S61 to S66 of the method P6, and, at the output of the prediction, a step S121 of verifying if a prediction period has elapsed.

When the prediction period has elapsed, the method P12 comprises a step of updating the observations with observations performed during the latest prediction period, then going back to step S61 to perform a new prediction.

The method P12 also periodically re-calculates the error models. To this effect, it comprises all the steps of the method P4 and recalculates the error models when a training period has elapsed.

For example, it may to this effect comprise a step S122 of verifying if the training period has elapsed and, if the training period has elapsed, the method comprises a step of updating the training time series with observations performed during the training period and going back to the step S41.

Therefore, the method P12 allows performing iteratively prediction as early as new observations data are available, and periodically re-train the error models in order to ensure that the error models are adapted to the latest known observations.

It is now referred to figures 13 and 14.

Figure 13 represents an example of load balance problem on links in the network where the invention was used.

More specifically, the bars Ld13.1, Ld13.2; Ld13.3 and Ld13.4 represents the load on 4 peering links of a network.

The heights of the bars represent links' capacities (speed) and is divided between a plurality of rectangles that represent the predicted bitrates of a plurality of traffic fractions carried by the links, distinguished by destination IP address prefixes.

In this example, each link has a capacity of 200Gbps, the horizontal bar C=200Gbps thus indicates the maximal bitrate that can transported by each link, while the horizontal bar C1/2 = 100Gpbs indicates a load of 50% for a link.

In the example of figure 13, the load is strongly imbalanced, since the load Ld13.4 in the fourth link is very high, while the loads Ld13.2 and 13.3 are much lower.

The figure 14 represents an example of load balance in the same network after network reconfiguration proposed after analysis of predicted bit rates of particular traffic fractions with the use of the invention.

Efficient predictions of large number of time series representing traffic fractions, possible due to the invention, allows to plan network reconfiguration before a load imbalance problem occurs.

The loads Ld14.1, Ld14.2, Ld14.3 and Ld14.4 respectively represent the loads at the same four links than the loads Ld13.1, Ld13.2; Ld13.3 and Ld13.4 represented in figure 13.

It can be seen that the load is much better balanced in figure 14.

This example demonstrates the ability of the invention to improve proactive (based on predictions) resource management, and in particular load balance over time.

## Claims

1. A computer-implemented method (P6, P13) comprising:
- extracting (S61) a feature representation of a time series (TS71, TS72, TS73, TS8, TS9) of observations of bandwidth usage;
- for each prediction model in a set of prediction models:
o using (S62) a trained error model associated with the prediction model to obtain an expected prediction error of the prediction model for said feature representation ;
- selecting (S64) a subset (Subs8, Subs9) of said set of prediction models based at least on the expected prediction errors ;
- using said subset of prediction models to predict (S65) a future bandwidth usage (TSF71, TSF72, TSF73, TSF8, TSF9) from said time series of observations for a plurality of IP addresses, or IP address prefixes, respectively;
- allocating (S66) said plurality of IP addresses, or IP address prefixes, to a plurality of network nodes in order to balance a predicted network load across the network based on said predicted future bandwidth usage.

2. The method of claim 1, wherein said set of prediction models comprises at least two models belonging to at least two models type in a group comprising:
- a regression model ;
- a neural network ;
- a statistical model ;
- a theta transform ;
- a seasonal averaging of time series.

3. The method of any of the preceding claim, wherein the trained error model is a regression model.

4. The method according to claim 1, wherein:
- said subset (Subs9) comprises a single prediction model that exhibits the lowest prediction error ;
- said step of using said subset of prediction models to predict the future bandwidth usage comprises using said single resource usage prediction model to predict the future bandwidth usage (TSF9) from said time series.

5. The method according to claim 1, wherein:
- said subset (Subs8) comprises a plurality of prediction models (M81, M82) ;
- said step of using said subset of prediction models to predict the future bandwidth usage comprises:
o using each of said plurality of prediction models to predict respectively a plurality of model predicted future bandwidth usages (TSF8M81, TSF8M82) from said time series ;
o aggregating (S81) said model predicted future bandwidth usages into said predicted future bandwidth usage (TSF8).

6. The method of claim 5, wherein said step of aggregating said model predicted future bandwidth usages into said predicted future bandwidth usage is performed using an aggregation method which is expected to provide the most accurate prediction according to said subset of prediction models.

7. The method of one of claim 4 to 6, wherein using each of said plurality of prediction models to predict a model predicted future bandwidth usage, or using said single prediction model to predict the future bandwidth usage based on said time series comprises:
- training each of said plurality of prediction models, or training said single prediction model based on said time series of observations ;
- using each of said plurality of trained prediction models to predict the model predicted future bandwidth usage, or using said single prediction model to predict the future bandwidth usage.

8. The method according to any of the preceding claims, wherein the feature representation of the time series is obtained by applying a dimensionality reduction to time series of bandwidth usage.

9. The method according to any of the preceding claims, wherein obtaining said subset comprises determining, for each prediction model, a score based on the expected prediction error of the prediction model, and at least one further characteristic concerning an execution time or computing requirements of the prediction model.

10. The method of any of the preceding claims comprising, prior to said step of extracting the feature representation of the time series and for each prediction model in the set of prediction models:
- for each training time series comprising a training set and a validation set in a set of training time series of observations of said bandwidth usage:
o training (S41) the prediction model using the training set ;
o computing (S42) a prediction error of the trained prediction model on the validation set ;
o extracting (S43) said feature representation of the training set ;
o enriching (S44) an error training set with an association between said prediction error and said feature representation of the training set ;
- training (S46) an error model using said error training set ;
- associating (S47) said trained error model to said prediction model.

11. The method of claim 10, further comprising:
- when a prediction period has elapsed (S121):
o updating the time series of observations with observations of bandwidth usage during the prediction period ;
o going back to said step of extracting (S61) the feature representation of the time series of bandwidth usage;
- when a training period has elapsed (S122):
o updating the set of training time series with observations of bandwidth during the training period ;
o going back to said step of training (S41) the prediction model.

12. Computer program comprising instructions to implement a method according to one of claims 1 to 11 when the program is executed by a processor.

13. Computer-readable non-transient recording medium on which instructions are registered to implement a method according to one of claims 1 to 11 when the instructions are executed by a processor.

14. Computing system (Comp) comprising at least one processing unit (Proc) configured to execute a method according to one of claims 1 to 11.

## Patentansprüche

1. Computerimplementiertes Verfahren (P6, P13), das Folgendes umfasst:
- Extrahieren (S61) einer Merkmalsrepräsentation einer Zeitreihe (TS71, TS72, TS73, TS8, TS9) von Beobachtungen einer Bandbreitenverwendung;
- für jedes Vorhersagemodell in einem Satz Vorhersagemodelle:
o Verwenden (S62) eines trainierten Fehlermodells, das dem Vorhersagemodell zugeordnet ist, um einen erwarteten Vorhersagefehler des Vorhersagemodells für die Merkmalsrepräsentation zu erhalten;
- Wählen (S64) einer Untermenge (Subs8, Subs9) des Satzes Vorhersagemodelle mindestens auf der Grundlage der erwarteten Vorhersagefehler;
- Verwenden der Untermenge von Vorhersagemodellen, um eine künftige Bandbreitenverwendung (TSF71, TSF72, TSF73, TSF8, TSF9) aus der Zeitreihe von Beobachtungen jeweils für mehrere IP-Adressen oder IP-Adresspräfixe vorherzusagen (S65); und
- Zuweisen (S66) der mehreren IP-Adressen oder IP-Adresspräfixe zu mehreren Netzknoten, um eine vorhergesagte Netzlast über das Netz auf der Grundlage der vorhergesagten künftigen Bandbreitenverwendung auszugleichen.

2. Verfahren nach Anspruch 1, wobei der Satz Vorhersagemodelle mindestens zwei Modelle umfasst, die mindestens zwei Modelltypen in einer Gruppe angehören, die Folgendes umfasst:
- ein Regressionsmodell;
- ein neuronales Netz;
- ein statistisches Modell;
- eine Thetatransformation; und
- ein saisonabhängiges Mitteln von Zeitreihen.

3. Verfahren nach einem vorhergehenden Anspruch, wobei das trainierte Fehlermodell ein Regressionsmodell ist.

4. Verfahren nach Anspruch 1, wobei
- die Untermenge (Subs9) ein einzelnes Vorhersagemodell umfasst, das den geringsten Vorhersagefehler aufweist; und
- der Schritt des Verwendens der Untermenge von Vorhersagemodellen, um die künftige Bandbreitenverwendung vorherzusagen, ein Verwenden des einzelnen Betriebsmittelverwendungsvorhersagemodells, um die künftige Bandbreitenverwendung (TSF9) aus der Zeitreihe vorherzusagen, umfasst.

5. Verfahren nach Anspruch 1, wobei
- die Untermenge (Subs8) mehrere Vorhersagemodelle (M81, M82) umfasst und
- der Schritt des Verwendens der Untermenge von Vorhersagemodellen, um die künftige Bandbreitenverwendung vorherzusagen, Folgendes umfasst:
o Verwenden jedes der mehreren Vorhersagemodelle, um jeweils mehrere modellvorhergesagte künftige Bandbreitenverwendungen (TSF8M81, TSF8M82) aus der Zeitreihe vorherzusagen; und
o Zusammenfassen (S81) der modellvorhergesagten künftigen Bandbreitenverwendungen in die vorhergesagte künftige Bandbreitenverwendung (TSF8).

6. Verfahren nach Anspruch 5, wobei der Schritt des Zusammenfassens der modellvorhergesagten künftigen Bandbreitenverwendungen in die vorhergesagte künftige Bandbreitenverwendung unter Verwendung eines Zusammenfassungsverfahrens durchgeführt wird, von dem gemäß der Untermenge von Vorhersagemodellen erwartet wird, dass es die genaueste Vorhersage liefert.

7. Verfahren nach einem der Ansprüche 4 bis 6, wobei das Verwenden jedes der mehreren Vorhersagemodelle, um eine modellvorhergesagte künftige Bandbreitenverwendung vorherzusagen, oder das Verwenden des einzelnen Vorhersagemodells, um die künftige Bandbreitenverwendung auf der Grundlage der Zeitreihe vorherzusagen, Folgendes umfasst:
- Trainieren jedes der mehreren Vorhersagemodelle oder Trainieren des einzelnen Vorhersagemodells auf der Grundlage der Zeitreihe von Beobachtungen und
- Verwenden jedes der mehreren trainierten Vorhersagemodelle, um die modellvorhergesagte künftige Bandbreitenverwendung vorherzusagen, oder Verwenden des einzelnen Vorhersagemodells, um die künftige Bandbreitenverwendung vorherzusagen.

8. Verfahren nach einem der vorhergehenden Ansprüche, wobei die Merkmalsrepräsentation der Zeitreihe durch Anwenden einer Dimensionalitätsverringerung auf die Zeitreihe der Bandbreitenverwendung erhalten wird.

9. Verfahren nach einem der vorhergehenden Ansprüche, wobei das Erhalten der Untermenge ein Bestimmen für jedes Vorhersagemodell einer Bewertung auf der Grundlage des erwarteten Vorhersagefehlers des Vorhersagemodells und mindestens einer weiteren Charakteristik, die eine Ausführungszeit oder Rechenanforderungen des Vorhersagemodells betrifft, umfasst.

10. Verfahren nach einem der vorhergehenden Ansprüche, das vor dem Schritt des Extrahierens der Merkmalsrepräsentation der Zeitreihe und für jedes Vorhersagemodell im Satz Vorhersagemodelle Folgendes umfasst:
- für jede Trainingszeitreihe, die einen Trainingssatz und einen Validierungssatz umfasst, in einem Satz Trainingszeitreihen von Beobachtungen der Bandbreitenverwendung:
o Trainieren (S41) des Vorhersagemodells unter Verwendung des Trainingssatzes;
o Berechnen (S42) eines Vorhersagefehlers des trainierten Vorhersagemodells am Validierungssatz;
o Extrahieren (S43) der Merkmalsrepräsentation des Trainingssatzes und
o Anreichern (S44) eines Fehlertrainingssatzes mit einer Zuordnung zwischen dem Vorhersagefehler und der Merkmalsrepräsentation des Trainingssatzes;
- Trainieren (S46) eines Fehlermodells unter Verwendung des Fehlertrainingssatzes und
- Zuordnen (S47) des trainierten Fehlermodells zum Vorhersagemodell.

11. Verfahren nach Anspruch 10, das ferner den folgenden Schritt umfasst:
- wenn ein Vorhersagezeitraum verstrichen ist (S121):
o Aktualisieren der Zeitreihe von Beobachtungen mit Beobachtungen der Bandbreitenverwendung während des Vorhersagezeitraums und
o Zurückkehren zum Schritt des Extrahierens (S61) der Merkmalsrepräsentation der Zeitreihe der Bandbreitenverwendung; und
- wenn ein Trainingszeitraum verstrichen ist (S122):
o Aktualisieren des Satzes Trainingszeitreihen mit Beobachtungen der Bandbreite während des Trainingszeitraums und
o Zurückkehren zum Schritt des Trainierens (S41) des Vorhersagemodells.

12. Computerprogramm, das Befehle umfasst, um ein Verfahren nach einem der Ansprüche 1 bis 11 zu implementieren, wenn das Programm durch einen Prozessor ausgeführt wird.

13. Computerlesbares nicht transientes Aufzeichnungsmedium, in dem Befehle registriert sind, um ein Verfahren nach einem der Ansprüche 1 bis 11 zu implementieren, wenn die Befehle durch einen Prozessor ausgeführt werden.

14. Rechensystem (Comp), das mindestens eine Verarbeitungseinheit (Proc) umfasst, die konfiguriert ist, ein Verfahren nach einem der Ansprüche 1 bis 11 auszuführen.

## Revendications

1. Procédé (P6, P13) mis en œuvre par ordinateur, le procédé comprenant les étapes suivantes :
- extraire (S61) une représentation de caractéristiques d'une série temporelle (TS71, TS72, TS73, TS8, TS9) d'observations d'utilisation de la bande passante ;
- pour chaque modèle de prédiction dans un ensemble de modèles de prédiction :
∘ utiliser (S62) un modèle d'erreur entrainé associé au modèle de prédiction pour obtenir une erreur de prédiction attendue du modèle de prédiction pour ladite représentation de caractéristiques ;
- sélectionner (S64) un sous-ensemble (Subs8, Subs9) dudit ensemble de modèles de prédiction sur la base au moins des erreurs de prédiction attendues ;
- utiliser ledit sous-ensemble de modèles de prédiction pour prédire (S65) une utilisation future de la bande passante (TSF71, TSF72, TSF73, TSF8, TSF9) à partir de ladite série temporelle d'observations pour une pluralité d'adresses IP, ou de préfixes d'adresses IP, respectivement ;
- allouer (S66) ladite pluralité d'adresses IP, ou de préfixes d'adresses IP, à une pluralité de nœuds de réseau, afin d'équilibrer une charge réseau prédite sur le réseau sur la base de ladite utilisation future prédite de la bande passante.

2. Procédé selon la revendication 1, dans lequel ledit ensemble de modèles de prédiction comprend au moins deux modèles appartenant à au moins deux types de modèles dans un groupe comprenant :
- un modèle de régression ;
- un réseau de neurones ;
- un modèle statistique ;
- une transformée thêta ;
- une moyenne saisonnière de séries chronologiques.

3. Procédé selon l'une quelconque des revendications précédentes, dans lequel le modèle d'erreur entraîné est un modèle de régression.

4. Procédé selon la revendication 1, dans lequel :
- ledit sous-ensemble (Subs9) comprend un seul modèle de prédiction présentant l'erreur de prédiction la plus faible ;
- ladite étape d'utilisation dudit sous-ensemble de modèles de prédiction pour prédire l'utilisation future de bande passante comprend l'utilisation dudit modèle de prédiction d'utilisation de ressources unique pour prédire l'utilisation future de bande passante (TSF9) à partir de ladite série temporelle.

5. Procédé selon la revendication 1, dans lequel :
- ledit sous-ensemble (Subs8) comprend une pluralité de modèles de prédiction (M81, M82) ;
- ladite étape comprenant d'utiliser ledit sous-ensemble de modèles de prédiction pour prédire l'utilisation future de la bande passante comprend les étapes suivantes :
∘ utiliser chacun de ladite pluralité de modèles de prédiction pour prédire respectivement une pluralité d'utilisations futures de bande passante prédites de modèle (TSF8M81, TSF8M82) à partir de ladite série temporelle ;
∘ agréger (S81) lesdites utilisations futures de bande passante prédites de modèle dans ladite utilisation future de bande passante prédite (TSF8).

6. Procédé selon la revendication 5, dans lequel ladite étape d'agrégation desdites utilisations futures de bande passante prédites de modèle dans ladite utilisation future de bande passante prédite est effectuée en utilisant un procédé d'agrégation qui est censé fournir la prédiction la plus précise selon ledit sous-ensemble de modèles de prédiction.

7. Procédé selon l'une des revendications 4 à 6, dans lequel l'utilisation de chacun de ladite pluralité de modèles de prédiction pour prédire une utilisation future de bande passante prédite de modèle, ou l'utilisation dudit modèle de prédiction unique pour prédire l'utilisation future de bande passante sur la base de ladite série temporelle comprend les étapes suivantes :
- entraîner chacun de ladite pluralité de modèles de prédiction, ou entraîner ledit modèle de prédiction unique sur la base de ladite série temporelle d'observations ;
- utiliser chacun de ladite pluralité de modèles de prédiction entraînés pour prédire l'utilisation future de bande passante prédite de modèle, ou utiliser ledit modèle de prédiction unique pour prédire l'utilisation future de la bande passante.

8. Procédé selon l'une quelconque des revendications précédentes, dans lequel la représentation de caractéristiques de la série temporelle est obtenue en appliquant une réduction de dimension à une série temporelle d'utilisation bande passante.

9. Procédé selon l'une quelconque des revendications précédentes, dans lequel l'obtention dudit sous-ensemble comprend de déterminer, pour chaque modèle de prédiction, un score basé sur l'erreur de prédiction attendue du modèle de prédiction, et au moins une autre caractéristique concernant un temps d'exécution ou des exigences en termes de calcul du modèle de prédiction.

10. Procédé selon l'une quelconque des revendications précédentes comprenant, avant ladite étape d'extraction de la représentation de caractéristiques de la série temporelle, et pour chaque modèle de prédiction dans l'ensemble de modèles de prédiction, les étapes suivantes :
- pour chaque série temporelle d'entraînement comprenant un ensemble d'entraînement et un ensemble de validation dans un ensemble de séries temporelles d'entraînement d'observations de ladite utilisation de la bande passante :
∘ entraîner (S41) le modèle de prédiction à l'aide de l'ensemble d'entrainement ;
∘ calculer (S42) une erreur de prédiction du modèle de prédiction entrainé sur l'ensemble de validation ;
∘ extraire (S43) ladite représentation de caractéristiques de l'ensemble d'entraînement ;
∘ enrichir (S44) un ensemble d'entraînement d'erreur avec une association entre ladite erreur de prédiction et ladite représentation de caractéristiques de l'ensemble d'entraînement ;
- entraîner (S46) un modèle d'erreur à l'aide dudit ensemble d'entraînement d'erreur ;
- associer (S47) ledit modèle d'erreur entrainé audit modèle de prédiction.

11. Procédé selon la revendication 10, le procédé comprenant en outre les étapes suivantes :
- lorsqu'une période de prédiction s'est écoulée (S121) :
∘ mettre à jour la série temporelle d'observations avec des observations d'utilisation de la bande passante au cours de la période de prédiction ;
∘ remonter à ladite étape d'extraction (S61) de la représentation de caractéristiques de la série temporelle d'utilisation de la bande passante ;
- lorsqu'une période d'entraînement est écoulée (S122) :
∘ mettre à jour l'ensemble des séries chronologiques d'entraînement avec les observations de la bande passante pendant la période d'entraînement ;
∘ remonter à ladite étape d'entrainement (S41) du modèle de prédiction.

12. Programme informatique comprenant des instructions pour mettre en œuvre un procédé selon l'une quelconque des revendications 1 à 11 lorsque le programme est exécuté par un processeur.

13. Support d'enregistrement non transitoire lisible par un ordinateur sur lequel des instructions sont enregistrées pour mettre en œuvre un procédé selon l'une des revendications 1 à 11, lorsque les instructions sont exécutées par un processeur.

14. Système informatique (Comp) comprenant au moins une unité de traitement (Proc) configurée pour exécuter un procédé selon l'une des revendications 1 à 11.
